# EUROPÄISCHE PATENTANMELDUNG

(11) **EP 0 947 282 A2**
(43) Veröffentlichungstag der Anmeldung: **06.10.1999**
(21) Anmeldenummer: 99100228.8
(22) Anmeldetag: 08.01.1999
(51) Int. Cl.: B23K 26/00

(54) **Einstell- und Probeschweissvorrichtung für einen Werkzeugkopf einer Laserstrahlschweissmaschine**

(30) Priorität: 03.04.1998 DE 19814912
(71) Anmelder: Krupp Drauz Ingenieurbetrieb GmbH, 09337 Hohenstein-Ernstthal (DE)
(72) Erfinder: Stein, Hans, 09358 Wüstenbrand (DE)
(74) Vertreter: Illing, Ralf, Dipl.-Jur. Ing.

(57) **Zusammenfassung**

Die Erfindung betrifft eine Einstell- und Probeschweißvorrichtung für einen Werkzeugkopf einer Laserstrahlschweißmaschine, der an einer Geradführung über der Schweißfuge verfahrbar gelagert und senkrecht sowie quer dazu verstellbar ist.

Die erfindungsgemäße Vorrichtung soll kostengünstig gestaltet sein und den Produktionsbereich der Laserstrahlschweißmaschine von Probeschweißungen frei halten.
Die erfindungsgemäße Lösung ordnet die Einstell- und Probeschweißvorrichtung in Verlängerung der Schweißfuge unmittelbar neben dem Positionier- und Spanntisch der Laserstrahlschweißmaschine an. Die Vorrichtung besteht aus einem Schwenkarm, der begrenzt schwenkbar ist. Seine Schwenkachse verläuft rechtwinklig zur Schweißfuge. Auf einer Grundplatte des Schwenkarmes sind beidseitig der Schweißfuge je eine Spanneinrichtung für Probeplatinen angeordnet. Vor der Schweißfuge ist eine Skalierung angeordnet.

## Beschreibung

Die Erfindung betrifft eine Einstell- und Probeschweißvorrichtung für einen Werkzeugkopf einer Laserstrahlschweißmaschine, der an einer Geradführung über der Schweißfuge verfahrbar gelagert und senkrecht sowie quer dazu verstellbar ist.

Zur Einstellung des Brennpunktabstandes ist es bekannt, optische Meßgeräte in der Fokalebene anzuordnen und nach deren Meßergebnis den Werkzeugkopf einzustellen. Derartige Meßgeräte sind teuer in der Anschaffung, sehr empfindlich bei der Benutzung und fast immer störend während des Produktionsbetriebes. Nach einer so erfolgten Einstellung des Werkzeugkopfes ist es unabdingbar, ein Probewerkstück zu schweißen, um die Naht prüfen zu können. Dazu wird bisher die Laserstrahlschweißmaschine benutzt. Dort werden, wie unter Produktionsbedingungen, zwei Blechplatinen positioniert, gespannt, geschweißt und entnommen. Dann wird die Naht geprüft und zu evtl. Änderungen in den Schweißbedingungen entschieden. Auch das Probeschweißen in der Schweißmaschine ist aufwendig. Von Nachteil ist weiterhin, daß der Schweißvorgang in der Maschine wegen der großen Abstände durch die Transporteinrichtungen optisch nicht kontrolliert werden kann. Erst die fertiggestellte Schweißnaht kann am entnommenen Werkstück beurteilt werden.

Es ist Aufgabe der Erfindung, eine Einstell- und Probeschweißvorrichtung der genannten Gattung zu schaffen, die kostengünstig gestaltet ist und den Produktionbereich der Laserstrahlschweißmaschine von Probeschweißungen frei hält.

Die Aufgabe wird erfindungsgemäß durch die Merkmale des Kennzeichens des Patentanspruches 1 gelöst. Die Unteransprüche 2 bis 7 enthalten vorteilhaft gestaltete Einzelmerkmale oder Lösungsvarianten.
Die Anordnung der Einstell- und Probeschweißvorrichtung in Verlängerung der Schweißfuge unter der verlängerten Geradführung des Werkzeugkopfes ergibt eine gute Zugängigkeit des Schweißbereiches und schützt wirksam den Produktionsbereich der Laserstrahlschweißmaschine vor den Schäden und Verunreinigungen des Probeschweißbetriebes. Weiterhin ist der Schweißvorgang und die Lage des Brennpunktes des Laserstrahles an der Stoßfläche der Blechplatine ohne Entnahme des Probewerkstückes im eingespannten Zustand zu prüfen.
Die Verwendung einer Schwenkung der Einstell- und Probeschweißvorrichtung zur Ermittlung der Lage des Brennpunktes ermöglicht eine einfache und kostengünstige Ausführung der Vorrichtung sowie eine langwährende Wiederholgenauigkeit der Lageveränderungen. Die Skalierung der Grundplatte unter Einbeziehung ihrer Winkellage ermöglicht eine direkte Ablesbarkeit des Verstellweges des Werkzeugkopfes. Durch die maschinenkonforme Anordnung der Anschläge an der Grundplatte der hinteren Spanneinrichtung ist eine bleibende Übereinstimmung der Schweißfuge im Produktionsbereich der Laserstrahlschweißmaschine und am Probeschweißtisch gewährleistet. Die Schutzbleche an den Spanneinrichtungen vermeiden das ungewollte Verbleiben der Spannknebel im Schweißbereich.
Die Erfindung wird an einem Ausführungsbeispiel erläutert. Es zeigen:

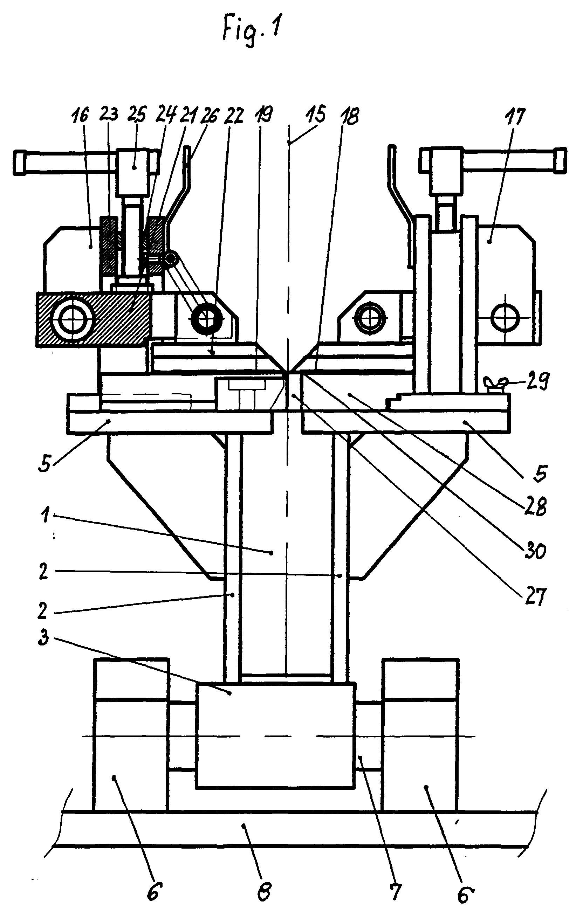

- Fig. 1: einen teilweisen Querschnitt durch die Einstell- und Probeschweißvorrichtung und

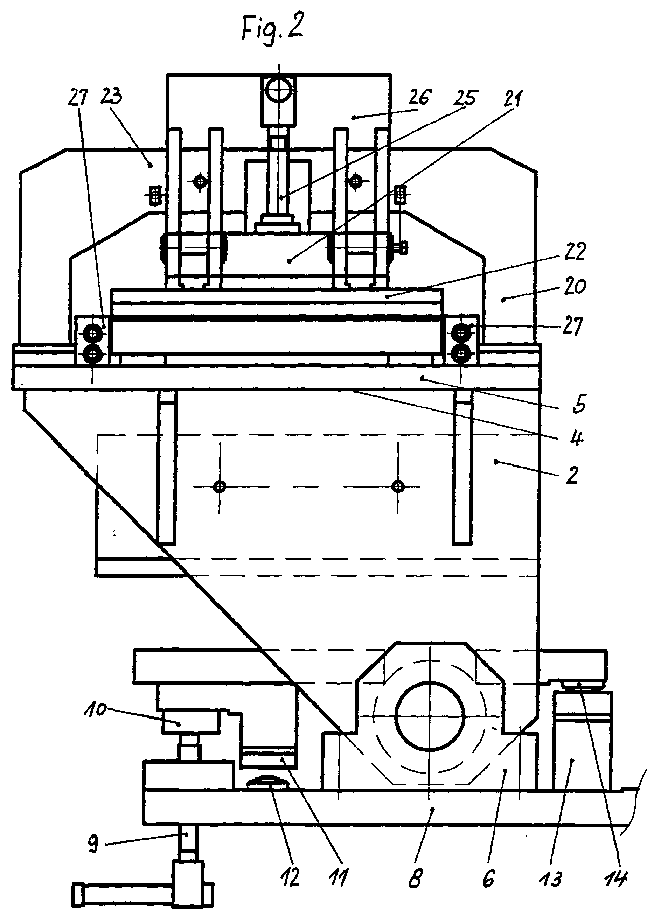

- Fig. 2: eine Seitenansicht.

Bei einer Laserstrahlschweißmaschine ist oberhalb der Positionier- und Spanntische parallel zur Schweißfuge eine Geradführung für den Werkzeugkopf angeordnet. Die Geradführung reicht über die seitlichen Begrenzungen der Positionier- und Spanntische hinaus, um den Werkzeugkopf aus dem Produktionsbereich herausfahren zu können. Die dabei angefahrene Position dient einerseits der Einstellung des Werkzeugkopfes - andererseits der Wartung des Werkzeugkopfes und der verschiedenen Vorrichtungen im Produktionsbereich.

Zur Ermittlung der Einstellung des Brennpunktabstandes am Werkzeugkopf ist seitlich am Positionier- und Spanntisch und unterhalb der über den Positionier- und Spanntisch hinausragenden Geradführung ein Schwenkarm 1 angeordnet. Dieser besteht aus einer senkrecht stehenden dreieckigen Lasche 2, deren Spitze nach unten zeigt und als Lagerbohrung 3 ausgebildet ist. Auf der nach oben zeigenden waagerecht verlaufenden Seite 4 der Lasche 2 ist eine waagerecht angeordnete Grundplatte 5 befestigt. Die Lagerbohrung 3 der Lasche 2 ist zwischen zwei Lagerböcken 6 geführt und dort durch einen gemeinsamen Lagerbolzen 7 schwenkbar gelagert. Die Lagerböcke 6 sind auf dem waagerechten Schenkel 8 eines Winkels befestigt, dessen senkrechter Schenkel an einer Seitenwand des zum Bediener zeigenden Positionier- und Spanntisch angebracht ist. Am freien Ende des waagerechten Schenkels 8 des Winkels ist eine Gewindebohrung für eine Verstellschraube 9 vorgesehen. Diese Verstellschraube 9 zeigt senkrecht von unten nach oben und liegt mit ihrem Druckstück an eine waagerechte Anschlagfläche 10 an, die an der Lasche 2 befestigt ist. Unmittelbar neben der Anschlagfläche 10 für die Verstellschraube 9 ist eine weitere Anschlagfläche 11 angebracht, die mit einem im waagerechten Schenkel 8 des Winkels vorgesehenen Festanschlag 12 zusammenwirkt. Die Dimensionierung dieses ersten Anschlagpaares 11;12 ist so gewählt, daß sie die maximale Schwenkbewegung der Lasche 2 begrenzen. Am zum Positionier- und Spanntisch zeigenden Teil des waagerechten Schenkels 8 des Winkels ist ein zweiter Festanschlag 13 angebracht, der mit einer an der Lasche 2 befestigten Anschlagfläche 14 zusammenwirkt. Dieses zweite Anschlagpaar 13;14 ist so dimensioniert, daß es die waagerechte Lage der Grundplatte 5 bestimmt. Gegen den zweiten Festanschlag 13 wirkt die Kraft der Verstellschraube 9.
Auf der Grundplatte 5 sind parallel zur verlängerten Schweißfuge 15 zwei Spanneinrichtungen 16;17 angeordnet. Die Spanneinrichtungen 16;17 dienen dem Positionieren und Klemmen je einer Probeplatine 18;19. Die hintere Spanneinrichtung 16 ist die nach der Schweißfuge 15 angeordnete - von der Bedienerposition aus gesehen. Die vordere Spanneinrichtung 17 liegt demzufolge vor der Schweißfuge 15 - von der Bedienerposition aus gesehen. Die hintere Spanneinrichtung 16 ist starr mit der Grundplatte 5 verbunden. Auf deren Spannfläche ist ein Spannportal 20 angeordnet, an dem ein einarmiger Hebel 21 schwenkbar gelagert ist. An dessen freiem zur Schweißfuge 15 zeigenden Ende ist ebenfalls schwenkbar eine Spannpratze 22 gelagert. Im waagerechten Balken 23 des Spannportals 20 ist eine Mutter 24 einer Spannschraube 25 befestigt. Die Spannschraube 25 drückt etwa auf die Mitte des Hebelarmes des einarmigen Hebels 21. An der zur Schweißfuge 15 zeigenden Seitenfläche des waagerechten Balkens 23 des Spannportals 20 ist ein leicht gekröpftes Schutzblech 26 befestigt, das Störungen im Schweißbereich vermeidet. An der Spannfläche der hinteren Spanneinrichtung 16 ist an der zur Schweißfuge 15 zeigenden Kante an jedem Ende ein Anschlag 27 so befestigt, daß seine zur Spanneinrichtung 16 zeigende Fläche deckungsgleich mit der Schweißfuge 15 ist.
Die vordere Spanneinrichtung 17 ist im wesentlichen gleich der hinteren Spanneinrichtung 16 ausgebildet. Sie trägt lediglich keine Anschläge 27. Die Länge ihrer Spannfläche ist so bemessen, daß sie zwischen die Anschläge 27 an der hinteren Spanneinrichtung 16 ragen kann. Die vordere Spanneinrichtung 17 ist auf der Grundplatte 5 leicht lösbar befestigt. Dazu ist an der Grundplatte 5 eine Leiste 28 mit übergriff angebracht, unter den ein angepaßter Vorsprung der Spannfläche geschoben ist. Die zur Bedienerposition zeigende Kante der Spannfläche ist durch zwei Flügelschrauben 29 an die Grundplatte 5 angeschraubt.
Auf der Leiste 28 mit übergriff ist eine Skalierung 30 angebracht. Deren Nullpunkt befindet sich senkrecht über der Schwenkachse der Lasche 2 (wenn die Grundplatte 5 in ihre waagerechte Lage gebracht ist). Die Skalierung 30 ist vom Positionier- und Spanntisch weggerichtet. Ihre Teilung ist als Zehnerteilung aufgebaut und um die Winkelfunktion des maximalen Schwenkwinkels der Grundplatte 5 zum Millimeter vergrößert.

Die Arbeitsweise der Einstell- und Probeschweißvorrichtung ist folgende:
1. Einstellen des Werkzeugkopfes
   Die vordere Spanneinrichtung 17 wird durch Lösen der Flügelschrauben 29 von der Grundplatte 5 getrennt und unter dem übergriff herausgezogen. Eine Probeplatine 19 wird in die hintere Spanneinrichtung 16 eingeführt, mit ihrer zu verschweißenden Kante an den Anschlägen 27 positioniert und durch die Spannschraube 25 und Spannpratze 22 gegen die Spannfläche festgespannt. Nun wird die Laserstrahlquelle eingeschaltet und eine Markierung auf die Probeplatine 22 gebrannt. Deren Abstand zur verschweißenden Kante wird mit der Meßlupe ermittelt und zur Querverstellung des Werkzeugkopfes benutzt. Anschließend wird die Verstellschraube 9 nahe der Lagerböcke 6 der Lasche 2 gelöst und dadurch die Lasche 2 mit Grundplatte 5 und hinterer Spanneinrichtung 16 so weit um den Lagerbolzen 7 geschwenkt bis das erste Anschlagpaar 11;12 miteinander im Eingriff ist. Durch die außermlttige Schwerpunktlage von Lasche 2, Grundplatte 5 und hinterer Spanneinrichtung 16 ist diese Lage sicher bestimmt. Die Laserstrahlquelle wird eingeschaltet und der grob im Brennpunktabstand eingestellte Werkzeugkopf vom Nullpunkt der Skalierung 30 in deren Richtung verfahren. Dabei zeichnet sich auf der zu verschweißenden Kante der Probeplatine 19 der Brennpunkt des Laserstrahles ab. Nach Abschalten der Laserstrahlquelle wird visuell ermittelt, an welcher Position der Kante der Probeplatine 19 sich der Brennpunkt des Laserstrahles in der gewünschten Höhe befindet. Unter Zuhilfenahme der Skalierung 30 wird der erforderliche Höhenverstellweg des Werkzeugkopfes ermittelt, der Werkzeugkopf verstellt und somit der Brennpunkt des Laserstrahles in die waagerechte Fokalebene transformiert. Auf diese Weise wird die Nullage des Brennpunktes in Querrichtung und Höhe ermittelt. Es ist üblich, zum Schweißen davon abweichende Werte einzustellen, um gezielt spezielle Schweißbedingungen zu schaffen.
2. Herstellung einer Probeschweißnaht
   Die Probeplatine 19 in der hinteren Spanneinrichtung 16 wird gelöst, entnommen und gegen eine neue Probeplatine 19 ausgetauscht, die erneut gegen die Anschläge 27 positioniert gespannt wird. Anschließend wird die vordere Spanneinrichtung 17 auf der Grundplatte 5 befestigt. Eine weitere Probeplatine 18 wird in die vordere Spanneinrichtung 17 eingeschoben, gegen die bereits gespannte Probeplatine 19 positioniert und gespannt. Durch das Betätigen der Verstellschraube 9 wird die Lasche 2 mit Grundplatte 5 und Spanneinrichtungen 16;17 geschwenkt bis das zweite Anschlagpaar 13;14 in Eingriff ist. Diese Position ergibt die waagerechte Lage der Grundplatte 5 und somit auch der Schweißfuge 15. Diese Position wird durch die angezogene Verstellschraube 9 gesichert. Der Werkzeugkopf befindet sich außerhalb der Probeplatinen 18;19. Die Laserstrahlquelle wird eingeschaltet und der Werkzeugkopf über die Länge der Probeschweißnaht verfahren. Nach dem Wegschalten des laserstrahles werden durch Lösen der Spannschrauben 25 beider Spanneinrichtungen 16;17 die verschweißten Probeplatinen 18;19 freigegeben und können zur Prüfung entnommen werden. Aus dem Ergebnis können Korrekturen der verschiedenen Schweißparameter abgeleitet werden.

Es liegt im Rahmen des Erfindungsgedankens, an Stelle der Schwenkung der Lasche 2 mit Grundplatte 5 und Spanneinrichtung 16;17 diese Lasche 2 in einer senkrechten Geradführung am Positionier- und Spanntisch verschiebbar zu lagern und mit einem als NC-Achse ausgebildeten Antrieb während der Vorschubbewegung des Werkzeugkopfes senkrecht zu verfahren. Auf diesem Wege läßt sich die Lage des Brennpunktes des Laserstrahles auf der zu verschweißenden Kante der Probeplatine 19 in der oben beschriebenen Weise gleichfalls korrigieren.

### Aufstellung der Bezugszeichen

- 1: Schwenkarm
- 2: Lasche
- 3: Lagerbohrung
- 4: Seite
- 5: Grundplatte
- 6: Lagerbock
- 7: Lagerbolzen
- 8: Schenkel
- 9: Verstellschraube
- 10: Anschlagfläche
- 11: Anschlagfläche
- 12: Festanschlag
- 13: Festanschlag
- 14: Anschlagfläche
- 15: Schweißfuge
- 16: Spanneinrichtung
- 17: Spanneinrichtung
- 18: Probeplatine
- 19: Probeplatine
- 20: Spannportal
- 21: Hebel
- 22: Spannpratze
- 23: Balken
- 24: Mutter
- 25: Spannschraube
- 26: Schutzblech
- 27: Anschlag
- 28: Leiste
- 29: Flügelschraube
- 30: Skalierung

## Patentansprüche

1. Einstell- und Probeschweißvorrichtung für einen Werkzeugkopf einer Laserstrahlschweißmaschine, der an einer Geradführung über der Schweißfuge verfahrbar gelagert und senkrecht sowie quer dazu verstellbar ist, gekennzeichnet durch folgende Merkmale:
a) die Einstell- und Probeschweißvorrichtung ist in Verlängerung der Schweißfuge (15) unmittelbar neben dem Positionier- und Spanntisch der Laserstrahlschweißmaschine unterhalb der verlängerten Geradführung des Werkzeugkopfes angeordnet;
b) die Einstell- und Probeschweißvorrichtung besteht aus einem Schwenkarm (1), der am Maschinengestell begrenzt schwenkbar gelagert ist;
dessen Schwenkachse (7) rechtwinklig zum Verlauf der Schweißfuge (15) angeordnet ist;
auf dem freien Ende (4) des Schwenkarmes (1) ist eine Grundplatte (5) befestigt;
auf der Grundplatte (5) sind beidseitig der Schweißfuge (15) Spanneinrichtungen (16;17) gelagert, die der wiederholgenauen Positionierung und Spannung zweier Probeplatinen (18;19) dienen;
auf der Grundplatte (5) ist unmittelbar vor der Schweißfuge (15) eine Skalierung (30) angeordnet.

2. Einstell- und Probeschweißvorrichtung nach Anspruch 1,
dadurch gekennzeichnet,
daß das Schwenklager (6) des Schwenkarmes (1) auf dem waagerechten (8) Arm eines am Positionier- und Spanntisch befestigten Winkels angeschraubt ist und am freien Ende des waagerechten Armes (8) des Winkels eine Gewindebohrung mit einer Verstellschraube (9) vorgesehen ist, deren Druckstück an eine etwa waagerechte Fläche (11) anliegt, die außermittig zum Schwenklager (6) am Schwenkarm (1) angeordnet ist.

3. Einstell- und Probeschweißvorrichtung nach den Ansprüchen 1 und 2,
dadurch gekennzeichnet,
daß beidseitig außermittig zum Schwenklager (6) Festanschläge (11;12) am Schwenkarm (1) und die Gegenanschläge (12;13) dazu auf dem waagerechten Arm (8) des Winkels befestigt sind, wobei die Höhen des ersten in der Nähe der Verstellschraube (9) liegenden Anschlagpaares (11;12) so bemessen ist, daß es den maximalen Schwenkwinkel des Schwenkarmes (1) begrenzt und das zweite auf der gegenüberliegenden Seite des Schwenklagers (6) angeordnete Anschlagpaar (13;14) in der Höhe so bemessen ist, daß es die waagerechte Lage der Grundplatte (5) am Schwenkarm (1) bestimmt.

4. Einstell- und Probeschweißvorrichtung nach den Ansprüchen 1 bis 3,
dadurch gekennzeichnet,
daß die Skalierung (30) auf der Leiste (28) mit dem Skalenstrich Null senkrecht über der Achse des Schwenkarmes (1) liegt, wenn die Grundplatte (5) sich in waagerechter Position befindet und mit den weiteren Skalenstrichen sich vom Positionier- und Spanntisch entfernt.

5. Einstell- und Probeschweißvorrichtung nach den Ansprüchen 1 bis 4,
dadurch gekennzeichnet,
daß die Grundplatte (5) der hinteren Spanneinrichtung (16) in Längsrichtung der Schweißfuge (15) gesehen länger ist als die Grundplatte (5) der vorderen Spanneinrichtung (17) und an den überstehenden Enden der Grundplatte (5) der hinteren Spanneinrichtung (16) nach oben über die Grundplatte (5) überstehende Anschläge (27) befestigt sind, die die Schweißkante einer Probeplatine (19) auf die Schweißfuge (15) positionieren.

6. Einstell- und Probeschweißvorrichtung nach den Ansprüchen 1 bis 5,
dadurch gekennzeichnet,
daß die vordere Spanneinrichtung (17) leicht lösbar auf der Grundplatte (5) befestigt ist.

7. Einstell- und Probeschweißvorrichtung nach den Ansprüchen 1 bis 6,
dadurch gekennzeichnet,
daß an den zu der Schweißfuge (15) gerichteten Seiten beider Spanneinrichtungen (16;17) je ein Schutzblech (26) angebracht ist, die verhindern, daß einer der Spannknebel (25) über die Schweißfuge (15) ragen kann.
